(19) Europäisches Patentamt
European Patent Office
Office européen des brevets

(11) **EP 3 639 409 B1**

(12) **FASCICULE DE BREVET EUROPEEN**

(45) Date de publication et mention de la délivrance du brevet:
**13.01.2021 Bulletin 2021/02**

(21) Numéro de dépôt: **18796468.9**

(22) Date de dépôt: **08.11.2018**

(51) Int Cl.:
*H04B 7/185* (2006.01)    *H01Q 15/00* (2006.01)
*H01Q 19/17* (2006.01)    *H01Q 19/19* (2006.01)
*H01Q 19/195* (2006.01)    *H04B 7/204* (2006.01)
*H01Q 5/45* (2015.01)

(86) Numéro de dépôt international:
**PCT/EP2018/080577**

(87) Numéro de publication internationale:
**WO 2019/092087 (16.05.2019 Gazette 2019/20)**

(54) **CHARGE UTILE DE SATELLITE COMPORTANT UN RÉFLECTEUR À DOUBLE SURFACE RÉFLÉCHISSANTE**

SATELLITENNUTZLAST MIT EINEM REFLEKTOR MIT ZWEI REFLEKTIERENDEN OBERFLÄCHEN

SATELLITE PAYLOAD COMPRISING A DUAL REFLECTIVE SURFACE REFLECTOR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **08.11.2017 FR 1760470**

(43) Date de publication de la demande:
**22.04.2020 Bulletin 2020/17**

(73) Titulaire: **Airbus Defence and Space SAS**
**31402 Toulouse Cedex 4 (FR)**

(72) Inventeurs:
• **THAIN, Andrew**
**31402 Toulouse Cedex 4 (FR)**
• **TUGEND, Vincent**
**31402 Toulouse Cedex 4 (FR)**

(74) Mandataire: **Ipside**
**6, Impasse Michel Labrousse**
**31100 Toulouse (FR)**

(56) Documents cités:
EP-A2- 1 083 626    US-A- 4 701 765
US-A- 5 576 721    US-A1- 2004 008 148

**Description**

## DOMAINE TECHNIQUE

La présente invention appartient au domaine des systèmes de télécommunications par satellite. Notamment, l'invention concerne une charge utile de satellite comportant un réseau de sources reliées à un réseau de formation de faisceau et un réflecteur à double surface réfléchissante.

## ÉTAT DE LA TECHNIQUE

De manière conventionnelle, un satellite de télécommunications comporte une charge utile équipée de moyens adaptés à échanger des données avec une ou plusieurs stations passerelles terrestres, et avec un ou plusieurs terminaux utilisateurs terrestres. Par « terrestre », on entend à la surface de la Terre, notamment à même le sol, en haut d'un bâtiment, d'un pylône, etc., immobile ou mobile (véhicule terrestre, maritime ou aéronautique).

Chaque station passerelle réalise, pour le satellite, un point d'accès à un cœur de réseau terrestre. Ainsi, une station passerelle qui reçoit, à partir du cœur de réseau, des données à destination d'un terminal utilisateur les émet à destination du satellite qui les retransmet à destination dudit terminal utilisateur. De manière analogue, le terminal utilisateur peut émettre des données à destination du satellite, qui les retransmet à destination d'une station passerelle, qui les retransmet vers le cœur de réseau.

De nos jours, il existe un besoin important d'augmenter la capacité des systèmes de télécommunications par satellite, notamment pour offrir des services haut débit, dits à bande large (« broadband » dans la littérature anglo-saxonne), et/ou pour desservir plus de terminaux utilisateurs, etc. De préférence, une telle augmentation de capacité doit s'accompagner d'une grande flexibilité et/ou d'une grande couverture géographique.

Les solutions existantes présentent une charge utile de satellite avec une antenne multi-faisceaux comportant un réseau de sources et un réseau de formation de faisceaux (« Beam Forming Network » ou BFN dans la littérature anglo-saxonne) semblent offrir un compromis optimal entre la bande passante maximale disponible, l'étendue de la région couverte et la flexibilité d'allouer plus ou moins de bande passante à certaines zones de ladite région.

Cependant, pour pouvoir opérer à la fois en émission et en réception dans des bandes de fréquences pour lesquelles l'écartement entre une sous-bande de fréquences utilisées en émission et une sous-bande de fréquences utilisées en réception est important (comme c'est le cas par exemple pour les bandes Ku, Ka, Q ou V), une telle charge utile doit généralement comporter plusieurs réseaux de sources et/ou plusieurs réflecteurs, ce qui augmente considérablement la complexité, la masse et le volume de la charge utile.

Les demandes de brevet US 2004/008148 A1 et EP 1083626 A2 donnent des exemples d'antennes de satellite de l'art antérieur dans lesquelles deux sous-réflecteurs empilés sont utilisés. Ces documents concernent des antennes de type SFPB (acronyme anglais de « Single Feed Per Beam ») dans laquelle chaque source permet de former un faisceau dans une bande de fréquences particulière. Les différentes sources sont isolées spatialement à des positions différentes, et la position de chaque source est définie respectivement par rapport à un sous-réflecteur.

## EXPOSÉ DE L'INVENTION

La présente invention a pour objectif de remédier à tout ou partie des inconvénients de l'art antérieur, notamment ceux exposés ci-avant, en proposant une charge utile de satellite qui est à la fois flexible en couverture et en capacité, compacte, légère, et peu complexe à réaliser.

A cet effet, et selon un premier aspect, il est proposé par la présente invention, une charge utile de satellite d'un système de télécommunications. Ladite charge utile comporte un réflecteur, un réseau de sources, et un réseau de formation de faisceaux relié auxdites sources. Le réseau de sources est utilisé pour former des faisceaux pour transporter des signaux à la fois dans une première bande de fréquences, dite bande B1, et dans une deuxième bande de fréquences, dite bande B2. La bande de fréquences B2 est différente de la bande de fréquences B1.

Chaque faisceau est formé par plusieurs sources du réseau de sources. Chaque source du réseau de sources est adaptée pour la bande B1 et pour la bande B2. Le réflecteur comporte deux surfaces réfléchissantes positionnées l'une derrière l'autre par rapport au réseau de sources et présentant des courbures différentes de sorte que chaque surface réfléchissante produise une image du réseau de sources avec un facteur de grandissement différent. La surface réfléchissante la plus proche du réseau de sources est transparente pour l'ensemble des signaux transportés sur la bande B2 et adaptée pour réfléchir des signaux transportés dans la bande B1. L'autre surface réfléchissante est adaptée pour réfléchir des signaux transportés dans la bande B2.

Les sources sont adaptées pour émettre ou recevoir des signaux sur les deux bandes distinctes B1 et B2. Ces bandes peuvent notamment présenter un espace fréquentiel important, par exemple supérieur à 10% de la fréquence centrale de la bande B1.

Les deux surfaces réfléchissantes sont équivalentes à deux réflecteurs « empilés ». Il peut s'agir de deux surfaces d'un même réflecteur à double surface réfléchissante (une surface « avant » et une surface « arrière » du réflecteur correspondant alors respectivement à la surface la plus proche et à la surface la plus éloignée du réseau de source), ou bien il peut s'agir des surfaces de deux réflecteurs distincts, à simple surface réfléchissante, placés l'un derrière l'autre. La surface réfléchissante la plus proche du réseau de source est adaptée pour laisser passer les signaux de la bande B1 et pour réfléchir les signaux de la bande B2.

L' « image agrandie » du réseau de source produite par chaque surface réfléchissante est une image au sens optique du terme.

De telles dispositions permettent notamment de profiter de la flexibilité qu'offre une antenne multi-faisceaux tout en limitant le nombre de sources (un seul et même réseau de sources est utilisé pour émettre ou recevoir les signaux sur la bande B1 et les signaux sur la bande B2), et en limitant le volume occupé par le réflecteur. La courbure de chaque surface réfléchissante du réflecteur peut notamment être choisie en fonction des fréquences des bandes B1 et B2 pour que les faisceaux formés sur la bande B1 soient sensiblement les mêmes que ceux formés sur la bande B2, de sorte qu'ils couvrent sensiblement les mêmes zones géographiques à la surface de la Terre.

Dans des modes particuliers de réalisation, l'invention peut comporter en outre l'une ou plusieurs des caractéristiques suivantes, prises isolément ou selon toutes les combinaisons techniquement possibles.

Dans des modes particuliers de réalisation, la surface réfléchissante la plus éloignée du réseau de sources est en outre transparente pour l'ensemble des signaux transportés sur la bande B1.

De telles dispositions permettent notamment d'améliorer les performances de la charge utile du satellite.

Dans des modes particuliers de réalisation, des signaux transportés sur la bande B1 suivent une polarisation différente d'une polarisation suivie par des signaux transportés sur la bande B2, et une surface réfléchissante transparente est inopérante électriquement pour l'une de ces deux polarisations.

Dans des modes particuliers de réalisation, une surface réfléchissante transparente comporte des rubans conducteurs de l'électricité disposés parallèlement les uns aux autres.

De telles dispositions permettent d'obtenir une sélectivité par polarisation pour la ou les surfaces réfléchissantes. Par exemple, la surface réfléchissante la plus proche du réseau de source comporte des rubans métalliques selon une direction dite « horizontale » afin de réfléchir des signaux émis sur la bande B1 avec une polarisation linéaire selon cette direction horizontale, et de laisser passer des signaux émis sur la bande B2 avec une polarisation linéaire selon une direction dite « verticale » orthogonale à la direction horizontale.

Dans des modes particuliers de réalisation, le réflecteur comporte en outre des moyens pour entraîner en rotation la ou les surfaces réfléchissantes comportant des rubans conducteurs.

Le mouvement en rotation appliqué à une surface réfléchissante est par exemple effectué selon un axe de rotation passant par le centre de ladite surface réfléchissante et sensiblement perpendiculaire à un plan tangent à la surface réfléchissante au niveau dudit centre.

De telles dispositions permettent par exemple de pouvoir inverser la polarisation des signaux de la bande B1 et la polarisation des signaux de la bande B2.

Dans des modes particuliers de réalisation, une surface réfléchissante transparente est une surface sélective en fréquence.

De telles dispositions permettent d'obtenir une sélectivité par fréquence pour la ou les surfaces réfléchissantes au lieu ou en complément d'une sélectivité par polarisation.

Dans des modes particuliers de réalisation, les sources peuvent en outre émettre ou recevoir des signaux selon des polarisations différentes sur la bande B1 et/ou sur la bande B2.

En effet, si la ou les surfaces réfléchissantes présentent une sélectivité par fréquence, il reste possible d'utiliser des polarisations différentes pour des signaux émis ou reçus sur chaque bande B1 ou B2. On entend par là qu'il est possible, par exemple, d'utiliser simultanément deux polarisations différentes en réception sur la bande B1, et deux polarisations différentes en émission sur la bande B2. De telles dispositions permettent notamment de favoriser la réutilisation de fréquences dans la bande B1 ou B2 (par exemple deux faisceaux pourront simultanément utiliser la même fréquence ou une même sous-bande de fréquences sans générer d'interférences car ils auront des polarisations différentes).

Dans des modes particuliers de réalisation, le rapport entre les facteurs de grandissement est défini en fonction des fréquences des bandes B1 et B2 de sorte que les faisceaux formés sur la bande B1 et les faisceaux formés sur la bande B2 couvrent des zones géographiques identiques.

On entend par là qu'une zone géographique prédéterminée peut être couverte par un faisceau formé sur la bande B1 et un faisceau formé sur la bande B2 similaires, ou autrement dit qu'un faisceau formé sur une bande B1 et un faisceau formé sur une bande B2 peuvent couvrir des zones géographiques identiques.

Il convient de noter que par « zones géographiques identiques », on entend des zones géographiques sensiblement identiques, c'est-à-dire des zones géographiques ayant sensiblement la même forme, les mêmes dimensions, et les mêmes positions géographiques, étant entendu que les faisceaux formés ne couvriront probablement pas des zones géographiques strictement identiques.

Dans des modes particuliers de réalisation, le rapport entre les facteurs de grandissement est sensiblement égal à un rapport entre une longueur d'onde particulière de la bande B1 et une longueur d'onde particulière de la bande B2.

Par « sensiblement égal à », on entend par exemple que le rapport entre les facteurs de grandissement est égal au rapport entre une longueur d'onde particulière de la bande B1 et une longueur d'onde particulière de la bande B2 avec une marge d'erreur de l'ordre de 10% (autrement dit le rapport entre les facteurs de grandissement est compris dans l'intervalle allant de 90% à 110% du rapport entre une longueur d'onde particulière de la bande B1 et une longueur d'onde particulière de la bande B2).

Dans des modes particuliers de réalisation, le rapport entre les facteurs de grandissement est compris entre 90% et 110% d'un rapport $\dfrac{\lambda_{\min, B1}}{\lambda_{\min, B2}}$, où $\lambda_{\min,B1}$ et $\lambda_{\min,B2}$ sont respectivement la plus petite longueur d'onde de la bande B1 et la plus petite longueur d'onde de la bande B2.

Dans des modes particuliers de réalisation :

- les surfaces réfléchissantes sont concaves par rapport au réseau de sources et ont respectivement pour distance focale $F_{B1}$ et $F_{B2}$,
- le réseau de sources est décalé respectivement d'une distance $\delta_{B1}$ et $\delta_{B2}$ par rapport à un plan focal d'une surface réfléchissante vers ladite surface réfléchissante,
- les valeurs de $F_{B1}$, $F_{B2}$, $\delta_{B1}$, $\delta_{B2}$ et la distance séparant les deux surfaces réfléchissantes sont choisies de telle sorte que, les facteurs de grandissement des surfaces réfléchissantes étant respectivement notés $M_{B1}$ et $M_{B2}$, le rapport $\dfrac{M_{B1}}{M_{B2}} = \dfrac{F_{B1}}{\delta_{B1}} \cdot \dfrac{\delta_{B2}}{F_{B2}}$ est sensiblement égal à $\dfrac{\lambda_{\min, B1}}{\lambda_{\min, B2}}$, où $\lambda_{\min,B1}$ et $\lambda_{\min,B2}$ sont respectivement la plus petite longueur d'onde de la bande B1 et la plus petite longueur d'onde de la bande B2.

Par « sensiblement égal à », on entend par exemple que le rapport entre les facteurs de grandissement est égal au rapport entre la plus petite longueur d'onde de la bande B1 et la plus petite longueur d'onde de la bande B2 avec une marge d'erreur de l'ordre de 10% (autrement dit le rapport entre les facteurs de grandissement est inclus dans l'intervalle allant de 90% à 110% du rapport entre la plus petite longueur d'onde de la bande B1 et la plus petite longueur d'onde de la bande B2).

Dans des modes particuliers de réalisation, la bande B1 et/ou la bande B2 appartiennent à l'une des bandes Ku, Ka, Q ou V.

Dans des modes particuliers de réalisation, la bande B1 et la bande B2 correspondent respectivement à l'ensemble des fréquences montantes et à l'ensemble des fréquences descendantes de l'une des bandes Ku, Ka, Q ou V.

Dans des modes particuliers de réalisation, la bande B1 correspond à l'ensemble des fréquences montantes de la bande Ka, et la bande B2 correspond à l'ensemble des fréquences descendantes de la bande Ka.

Dans des modes particuliers de réalisation, le réflecteur et/ou le réseau de sources est orientable.

Dans des modes particuliers de réalisation, le réflecteur comportant deux surfaces réfléchissantes dans l'un quelconque des modes de réalisation précédents correspond à un réflecteur primaire ou à un réflecteur secondaire d'un système à deux réflecteurs (par exemple un système de type Cassegrain ou un système de type Grégorien).

Selon un deuxième aspect, la présente invention concerne un satellite d'un système de télécommunications par satellite, comportant une charge utile selon l'un quelconque des modes de réalisation précédents.

## PRÉSENTATION DES FIGURES

L'invention sera mieux comprise à la lecture de la description suivante, donnée à titre d'exemple nullement limitatif, et faite en se référant aux figures 1 à 8 qui représentent :

- Figure 1 : une représentation schématique d'un système de télécommunications par satellite,
- Figure 2 : une représentation schématique d'un exemple de réalisation d'une charge utile de satellite selon l'invention,
- Figure 3 : une représentation schématique d'un mode préféré de réalisation d'une charge utile de satellite selon l'invention,
- Figure 4 : un exemple d'utilisation de deux réseaux de sources distincts pour former des faisceaux similaires en émission et en réception,
- Figure 5 : des exemples de faisceaux formés en émission et en réception par un seul réseau de sources,
- Figure 6 : une illustration schématique d'un réseau de source surdimensionné pour former des faisceaux similaires en émission et en réception,
- Figure 7 : une illustration schématique de la solution proposée par l'invention consistant à produire deux images différentes d'un même réseau de sources avec deux facteurs de grandissement différents,
- Figure 8 : une représentation schématique d'un mode préféré de réalisation pour un réflecteur d'une charge utile de satellite selon l'invention,
- Figure 9 : une représentation schématique d'un mode particulier de réalisation mettant en oeuvre deux réflecteurs coopérant l'un avec l'autre.

Dans ces figures, des références identiques d'une figure à une autre désignent des éléments identiques ou analogues. Pour des raisons de clarté, les éléments représentés ne sont pas nécessairement à l'échelle, sauf mention contraire.

## DESCRIPTION DÉTAILLÉE DE MODES DE RÉALISATION

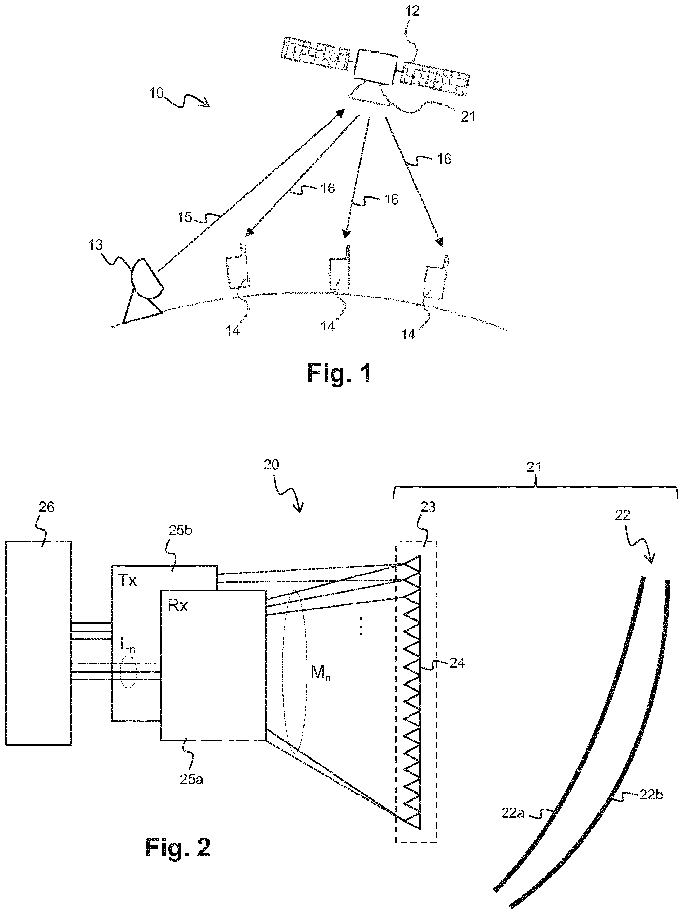

La figure 1 représente schématiquement un exemple de réalisation d'un système 10 de télécommunications par satellite.

Tel qu'illustré par la figure 1, le système 10 de télécommunications par satellite comporte au moins un satellite 12, au moins une station passerelle 13 terrestre et au moins un terminal utilisateur 14 terrestre.

Dans la suite de la description, on se place de manière non limitative dans le cas où le satellite 12 est en orbite géostationnaire (« Geostationary Orbit » ou GEO dans la littérature anglo-saxonne). Rien n'exclut cependant, suivant d'autres exemples, de considérer une orbite terrestre non géostationnaire, telle qu'une orbite basse altitude (« Low Earth Orbit » ou LEO), une orbite moyenne altitude (« Médium Earth Orbit » ou MEO), etc.

De manière conventionnelle, le satellite 12 comporte une charge utile adaptée à échanger des données avec la station passerelle 13 sur un lien 15 passerelle (« feeder link » dans la littérature anglo-saxonne), et à échanger des données avec chaque terminal utilisateur 14 sur un lien 16 utilisateur (« user link » dans la littérature anglo-saxonne). Un lien 16 utilisateur peut comporter une direction descendante (« downlink » dans la littérature anglo-saxonne) pour l'émission de donnée par le satellite et/ou une direction montante (« uplink » dans la littérature anglo-saxonne) pour la réception de données par le satellite. De manière similaire, un lien 15 passerelle peut comporter une direction montante (« uplink ») pour la réception de données par le satellite et/ou une direction descendante (« downlink ») pour l'émission de données par le satellite. De manière nullement limitative, l'exemple illustré à la figure 1 représente une réception de données en provenance de la station passerelle 13 par le satellite 12 (direction montante) sur un lien 15 passerelle, et des émissions de données du satellite 12 vers des terminaux utilisateur 14 (direction descendante) sur des liens 16 utilisateur.

Les émissions et/ou les réceptions sur les liens 16 utilisateur et/ou sur les liens 15 passerelle s'effectuent par exemple dans une ou plusieurs bandes de fréquences parmi les bandes W, Q, V, Ka, Ku, L, S, C, etc.

Dans la suite de la description, on se place à titre d'exemple et de manière nullement limitative dans le cas où les liens 15 passerelle et le les liens 16 utilisateur sont des liens bidirectionnels (c'est-à-dire que chaque lien présente une direction montante et descendante), et que la charge utile du satellite 12 comporte une antenne 21 qui est utilisée pour l'émission et pour la réception de données sur les liens 15 passerelle et sur les liens 16 utilisateur.

L'invention est particulièrement bien adaptée au cas où l'antenne 21 utilise une même bande de fréquences en émission et en réception, par exemple la bande Ka, pour laquelle la sous-bande de fréquences utilisées en réception et la sous-bande de fréquences utilisées en émission ont un écartement fréquentiel important, par exemple supérieur à 1 GHz. La bande Ka peut par exemple être utilisée aussi bien pour les liens 16 utilisateur que pour les liens 15 passerelle.

Il convient cependant de noter que l'invention est également applicable pour d'autres bandes de fréquences, comme par exemple les bandes Ku, V ou Q.

Aussi, dans une variante, l'antenne 21 peut être utilisée par exemple pour l'émission et la réception de données sur les liens 15 passerelle sur une bande donnée (par exemple la bande Ka), alors qu'une autre antenne est utilisée pour l'émission et la réception de données sur les liens 16 utilisateur sur une autre bande (par exemple la bande Ku).

Rien n'exclut non plus, selon un autre exemple, que l'antenne 21 soit utilisée par exemple pour l'émission de données sur les liens 15 passerelle et pour la réception de données sur les liens 16 utilisateur, et qu'une autre antenne soit utilisée pour la réception de données sur les liens 15 passerelle et pour l'émission de données sur les liens 16 utilisateur.

Rien n'exclut non plus, selon encore un autre exemple, que l'antenne 21 soit uniquement utilisée en réception, mais sur deux bandes distinctes (par exemple pour la réception de données sur les liens 15 passerelle sur la bande Ka et pour la réception de données sur les liens 16 utilisateur sur la bande Ku), ou bien inversement que l'antenne 21 ne soit utilisé qu'en émission sur deux bandes distinctes.

De manière générale, l'invention est applicable au cas où une antenne 21 de la charge utile 20 du satellite 12 est utilisée pour l'émission ou la réception de données sur une première bande de fréquences, et pour l'émission ou la réception de données sur une deuxième bande de fréquences, dans le cas où la première et la deuxième bandes de fréquences ont un écartement fréquentiel important, par exemple supérieur à 10% de la fréquence centrale de la bande B1.

Dans la suite de la description, on se place à titre d'exemple et de manière nullement limitative dans le cas où le satellite 12 utilise la bande Ka pour l'émission et la réception de données aussi bien sur le lien 15 passerelle que sur les liens 16 utilisateur. Autrement dit, la bande de fréquences en réception pour l'antenne 21 du satellite 12, appelée « bande Rx » dans la suite de la description, correspond à l'ensemble des fréquences montantes entre 27 et 29,5 GHz, et la bande de fréquences en émission pour l'antenne 21 du satellite 12, appelée « bande Tx » dans la suite de la description, correspond à l'ensemble des fréquences descendantes entre 17,3 GHz et 20,2 GHz.

La figure 2 représente schématiquement un exemple de réalisation d'une charge utile 20 destinée à être embarquée dans le satellite 12.

Tel qu'illustré par la figure 2, la charge utile 20 comporte une antenne 21 comportant un réflecteur 22 et un réseau 23 de sources 24.

Dans l'exemple illustré à la figure 2, la charge utile 20 comporte également deux réseaux de formation de faisceaux 25a, 25b (« Beam-Forming Network » ou BFN dans la littérature anglo-saxonne) qui sont reliés aux différentes sources 24 du réseau 23. Ces réseaux de formation de faisceaux 25a, 25b sont par exemple adaptatifs, et ils peuvent être analogiques ou numériques. Par « adaptatif », on entend que les faisceaux formés par chacun de ces réseaux de formation de faisceaux 25a, 25b peuvent varier au cours du temps. Par « analogique », on entend qu'un tel réseau de formation de faisceaux 25a, 25b effectue des traitements sur des signaux analogiques (électriques ou micro-ondes). Par « numérique », on entend qu'un tel réseau de formation de faisceaux 25a, 25b effectue des traitements sur des signaux numériques.

Les réseaux de formation de faisceaux 25a, 25b peuvent être de tout type connu de l'homme du métier. Dans la suite de la description, on se place à titre d'exemple nullement limitatif dans le cas de réseaux de formation de faisceaux 25a, 25b de type déphaseur (« phase shifter » dans la littérature anglo-saxonne).

Ainsi, chaque réseau de formation de faisceaux 25a, 25b peut comporter, de manière connue de l'homme du métier, des circuits déphaseurs adaptés à introduire un déphasage de valeur contrôlable, des amplificateurs de gain contrôlable, et des circuits duplicateurs qui dupliquent un signal à émettre et/ou des circuits additionneurs qui additionnent des signaux reçus.

L'un des deux réseaux de formation de faisceaux 25b est configuré pour l'émission de données. Il comporte un ou plusieurs ports d'entrée sur lesquels il reçoit un ou plusieurs signaux comportant des données à émettre, et plusieurs ports de sortie reliés aux sources 24 du réseau 23. Ce réseau de formation de faisceaux 25b fournit sur certains ports de sortie des répliques de chaque signal présentant des phases et des gains respectifs permettant de former des faisceaux prédéterminés, en collaboration avec les sources 24 et le réflecteur 22 de l'antenne. Chaque signal en entrée est ainsi émis par plusieurs sources 24 (« Multiple Feeds Per Beam » ou MFPB dans la littérature anglo-saxonne).

L'autre réseau de formation de faisceaux 25a est configuré pour la réception de signaux. Il comporte plusieurs ports d'entrée reliés aux sources 24 du réseau 23 et un ou plusieurs ports de sortie sur lesquels il fournit un ou plusieurs signaux comportant des données reçues. Des phases et des gains particuliers sont appliqués à des signaux reçus sur certains ports d'entrée, puis un signal correspondant à la somme de signaux obtenus est fourni sur un port de sortie. Chaque signal de sortie est ainsi obtenu à partir de signaux reçus au moyen de plusieurs sources 24.

Il convient de noter que les deux réseaux de formation de faisceaux 25a, 25b représentés à la figure 2 correspondent à deux éléments fonctionnels différents qui pourraient éventuellement être mis en œuvre par une seule et même entité physique, notamment dans le cas de réseaux de formation de faisceaux numériques.

Tel qu'illustré par la figure 2, la charge utile 20 comporte également un module 26 de commande desdits réseaux de formation de faisceaux 25a, 25b, configuré pour modifier les faisceaux devant être activés à un instant donné pour chaque réseau de formation de faisceaux 25a, 25b. Le module 26 de commande comporte par exemple un ou plusieurs processeurs et des moyens de mémorisation (disque dur magnétique, mémoire électronique, disque optique, etc.) dans lesquels est mémorisé un produit programme d'ordinateur, sous la forme d'un ensemble d'instructions de code de programme à exécuter. Alternativement ou en complément, le module 26 de commande comporte un ou des circuits logiques programmables (FPGA, PLD, etc.), et/ou un ou des circuits intégrés spécialisés (ASIC, etc.), et/ou un ensemble de composants électroniques discrets, etc.

Dans l'exemple illustré par la figure 2, et de manière non limitative, le module 26 de commande fournit également les signaux en entrée du réseau de formation de faisceaux 25b en émission, et reçoit les signaux en sortie du réseau de formation de faisceau 25a en réception. Rien n'exclut cependant, suivant d'autres exemples, que les signaux en entrée (respectivement en sortie) du réseau de formation de faisceaux 25b en émission (respectivement du réseau de formation de faisceaux 25a en réception) soient fournis (respectivement reçus) par un équipement distinct du module 26 de commande.

Dans l'exemple non limitatif illustré sur la figure 2, et pour la suite de la description, chaque réseau de formation de faisceaux 25a, 25b est relié au module 26 de commande par Ln liens (le réseau de formation de faisceaux 25b en émission comporte donc Ln ports d'entrée, et le réseau de formation de faisceaux 25a en réception comporte Ln ports de sortie), et au réseau 23 de sources 24 par Mn liens. Le nombre Mn correspond au nombre de sources 24 du réseau 23. Le nombre Ln correspond au nombre maximal de faisceaux qu'un réseau de formation de faisceaux 25a, 25b peut activer simultanément pour desservir des zones géographiques respectives à l'intérieur d'une région géographique prédéterminée à la surface de la Terre. Les zones géographiques qui peuvent être desservies par des faisceaux à l'intérieur de la région géographique prédéterminée peuvent être soit prédéfinies selon une répartition prédéfinie à l'intérieur de ladite région géographique, soit définies de façon opportuniste et dynamique afin, par exemple, de centrer un ou plusieurs faisceaux sur des villes ou des zones géographiques à très forte demande.

Là encore, il convient de noter que le module 26 de commande illustré à la figure 2 représente un élément fonctionnel qui peut éventuellement être mis en œuvre par le même élément matériel que celui mettant en œuvre les réseaux de formation de faisceaux 25a, 25b.

Le réflecteur 22 comporte deux surfaces réfléchissantes 22a, 22b disposées l'une derrière l'autre, et l'une au moins des deux surfaces réfléchissantes 22a, 22b, à savoir la surface réfléchissante 22a située au plus près du réseau 23 de sources 24, est transparente pour l'ensemble des signaux reçus sur la bande Rx ou pour l'ensemble des signaux émis sur la bande Tx.

Par exemple, la surface réfléchissante 22a est adaptée pour réfléchir des signaux reçus sur la bande Rx et pour laisser passer des signaux émis sur la bande Tx. Selon un autre exemple, la surface réfléchissante 22a est adaptée pour réfléchir des signaux émis sur la bande Tx et pour laisser passer des signaux reçus sur la bande Rx. Rien n'exclut cependant, selon encore un autre exemple, que la surface réfléchissante 22a soit transparente pour l'ensemble des signaux reçus sur la bande Rx et que l'autre surface réfléchissante 22b soit transparente pour l'ensemble des signaux émis sur la bande Tx.

Dans l'exemple illustré à la figure 2, et pour la suite de la description, on considère à titre d'exemple nullement limitatif que la surface réfléchissante 22a située au plus près du réseau 23 de sources 24 est adaptée pour réfléchir des signaux reçus sur la bande Rx et pour être transparente à des signaux émis sur la bande Tx. La surface réfléchissante 22b située derrière la surface réfléchissante 22a par rapport au réseau 23 de sources 24 est adaptée pour réfléchir des signaux transmis sur la bande Tx et peut éventuellement être transparente à des signaux reçus sur la bande Rx. Il est en effet avantageux que chaque surface réfléchissante 22a, 22b soit transparente respectivement à la bande Tx et à la bande Rx car les performances de l'antenne 21 sont alors meilleures.

Dans des modes particuliers de réalisation, les signaux reçus par les sources 24 sur la bande Rx suivent une polarisation différente d'une polarisation suivie par des signaux émis par les sources 24 sur la bande Tx, et au moins la surface réfléchissante 22a est transparente électriquement à l'une de ces deux polarisations.

Par exemple, les signaux reçus sur la bande Rx suivent une polarisation linéaire selon une direction dite « verticale » et les signaux émis sur la bande Tx suivent une polarisation linéaire selon une direction dite « horizontale » qui est orthogonale à la direction « verticale ». La surface réfléchissante 22a comporte par exemple un ensemble de rubans conducteurs de l'électricité, par exemple en métal, disposés parallèlement les uns aux autres et parallèlement à la direction verticale de la polarisation des signaux reçus sur la bande Rx, ainsi ladite surface réfléchissante 22a est transparente aux signaux émis sur la bande Tx avec une polarisation linéaire horizontale, tandis qu'elle réfléchit les signaux reçus sur la bande Rx avec une polarisation linéaire verticale. De manière optionnelle, pour améliorer les performances de l'antenne 21, la surface réfléchissante 22b peut elle aussi comporter un ensemble de rubans métalliques disposés parallèlement les uns aux autres et parallèlement à la direction horizontale de la polarisation des signaux émis sur la bande Tx, ainsi ladite surface réfléchissante 22b sera transparente aux signaux reçus sur la bande Rx avec une polarisation linéaire verticale, tandis qu'elle réfléchit les signaux émis sur la bande Rx avec une polarisation linéaire horizontale.

Dans des modes particuliers de réalisation, le réflecteur 22 comporte en outre des moyens mécaniques pour entraîner en rotation la ou les surfaces réfléchissantes 22a, 22b comportant des rubans métalliques tels que décrits précédemment. De telles dispositions permettent ainsi d'échanger la polarisation entre les signaux reçus sur la bande Rx et les signaux émis sur la bande Tx. Par exemple, en considérant la surface réfléchissante 22a qui comporte des rubans métalliques verticaux pour réfléchir des signaux reçus sur la bande Rx selon une polarisation linéaire verticale et laisser passer des signaux émis sur la bande Tx selon une polarisation linéaire horizontale, si ladite surface réfléchissante 22a subit une rotation d'un quart de tour, elle devient adaptée pour réfléchir des signaux reçus sur la bande Rx selon une polarisation linéaire horizontale et pour laisser passer des signaux émis sur la bande Tx selon une polarisation linéaire verticale.

Il convient de noter que d'autres moyens peuvent être mis en œuvre pour échanger la polarisation entre les signaux reçus sur la bande Rx et les signaux émis sur la bande Tx. Par exemple, la surface réfléchissante 22a ou les deux surfaces réfléchissantes 22a, 22b peuvent comporter un ensemble de rubans métalliques dans la direction verticale, et un ensemble de rubans métalliques dans la direction horizontale, et comporter en outre des composants électroniques de contrôle, comme par exemple des diodes, permettant d'activer ou désactiver sur commande l'ensemble des rubans horizontaux ou l'ensemble des rubans verticaux. Par exemple, les rubans sont découpés en segments dont la longueur est inférieure à la longueur d'onde et reliés les uns aux autres par des composants actifs jouant le rôle d'interrupteurs. Quand les interrupteurs sont fermés, les rubans interagissent avec l'onde et forment une structure polarisante. Quand les interrupteurs sont ouverts, les longueurs des segments sont en revanche suffisamment petites pour qu'ils n'interagissent pas avec l'onde. Pour commuter entre deux polarisations, il convient alors par exemple de fermer tous les interrupteurs des rubans horizontaux et d'ouvrir tous les interrupteurs des rubans verticaux, ou inversement.

Dans des modes particuliers de réalisation, l'une au moins des deux surfaces réfléchissantes 22a, 22b, à savoir la surface réfléchissante 22a située au plus près du réseau 23 de sources 24, est une surface sélective en fréquence, comme par exemple un réflecteur dichroïque. Un réflecteur dichroïque présente des propriétés de transmission et de réflexion d'une onde électromagnétique qui dépendent fortement de la longueur d'onde. Par exemple, la surface réfléchissante 22a réfléchit des signaux reçus sur une bande de fréquence appartenant à la bande Rx et laisse passer des signaux émis sur une bande de fréquence appartenant à la bande Tx. Optionnellement, la surface réfléchissante 22b réfléchit des signaux émis sur une bande de fréquence appartenant à la bande Tx et laisse passer des signaux émis sur une bande de fréquence appartenant à la bande Rx. De manière avantageuse, les deux surfaces réfléchissantes 22a, 22b sont sélectives en fréquence.

Dans des modes préférés de réalisation, la surface réfléchissante 22a et la surface réfléchissante 22b sont toutes deux sélectives en fréquence, et les sources 24 du réseau 23 sont en outre adaptées pour générer des signaux selon des polarisations différentes sur la bande Rx et/ou sur la bande Tx. Il s'agit ainsi de pouvoir utiliser simultanément deux polarisations différentes en Rx et deux polarisations différentes en Tx. On entend par exemple par « deux polarisations différentes » une polarisation linéaire verticale et une polarisation linéaire horizontale, ou bien une polarisation circulaire gauche (LHCP pour « Left Hand Circular Polarization » dans la littérature anglo-saxonne) et une polarisation circulaire droite (RHCP pour « Right Hand Circular Polarization » dans la littérature anglo-saxonne).

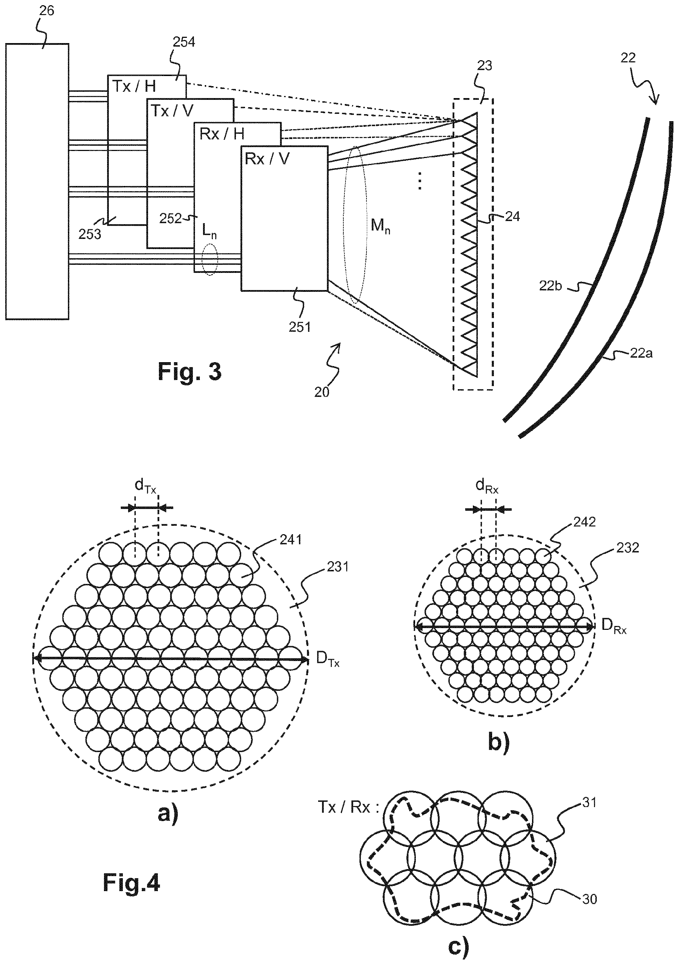

La figure 3 représente schématiquement un tel mode de réalisation. Tel qu'illustré sur la figure 3, la charge utile 20 du satellite 12 comporte quatre réseaux de formation de faisceaux. Un premier réseau de formation de faisceaux 251 est configuré pour recevoir des signaux sur la bande Rx selon une polarisation linéaire dans une direction dite verticale, un deuxième réseau de formation de faisceaux 252 est configuré pour recevoir des signaux sur la bande Rx selon une polarisation linéaire dans une direction dite horizontale orthogonale à la direction verticale, un troisième réseau de formation de faisceaux 253 est configuré pour émettre des signaux sur la bande Tx selon une polarisation linéaire dans la direction verticale, et un quatrième réseau de formation de faisceaux 254 est configuré pour émettre des signaux sur la bande Tx selon une polarisation linéaire dans la direction horizontale. De telles dispositions permettent de réutiliser simultanément une même fréquence ou une même sous-bande de fréquences dans la bande Rx ou dans la bande Tx selon deux polarisations différentes dans un même faisceau ou dans deux faisceaux desservant des zones géographiques proches. Une polarisation différente pour deux signaux utilisant une même fréquence ou une même sous-bande de fréquences permet en effet de discriminer lesdits signaux, alors que des interférences seraient trop élevées pour pouvoir discriminer lesdits signaux sans cette différence de polarisation.

Là encore, il convient de noter que les quatre réseaux de formation de faisceaux 251 à 254 illustrés à la figure 3 pourraient éventuellement être mis en œuvre par une seule et même entité physique, notamment s'il s'agit de réseaux de formation de faisceaux numériques. Ils sont représentés séparément sur la figure 3 car ils correspondent à des éléments fonctionnels distincts.

D'autre part, il convient de noter que l'exemple décrit à la figure 3 utilise des polarisations linéaires verticale et horizontale, mais il est également possible d'utiliser d'autres types de polarisation. Notamment, dans une variante, il est possible d'utiliser des polarisations circulaires gauche (LHCP) et droite (RHCP).

Les deux surfaces réfléchissantes 22a, 22b sont par exemple des paraboloïdes de révolution et elles présentent des courbures différentes. Chaque surface réfléchissante 22a, 22b produit ainsi une image agrandie (dans le sens optique du terme) du réseau 23 de sources 24 avec un facteur de grandissement différent. Comme cela sera expliqué plus en détail ultérieurement, pour avoir des zones géographiques couvertes par des faisceaux similaires en réception et en émission, le rapport entre lesdits facteurs de grandissement est avantageusement défini en fonction des fréquences de la bande Rx et des fréquences de la bande Tx.

Le réseau 23 de sources 24 est par exemple décalé par rapport à un plan focal de chaque surface réfléchissante 22a, 22b du réflecteur 22, et il est agencé entre ledit plan focal et le réflecteur 22 (antenne de type DAFR, acronyme anglais de « Defocused Array Fed Reflector », ou bien de type IPA, acronyme anglais de « Imaging Phased Array »). Dans une antenne de type DAFR, seulement un sous-ensemble des sources 24 du réseau 23 participent simultanément à la formation d'un faisceau. Dans une antenne de type IPA, le réseau 23 de sources 24 est généralement davantage décalé par rapport au plan focal que pour une antenne de type DAFR, et toutes les sources 24 du réseau 23 participent simultanément à la formation d'un faisceau. Dans la description, on se place à titre d'exemple nullement limitatif dans le cas d'une antenne 21 de type DAFR.

Dans les exemples illustrés à la figure 2 et à la figure 3, chaque source 24 du réseau 23 participe aussi bien à l'émission qu'à la réception de signaux. Chaque source 24 est ainsi par exemple associée à un amplificateur faible bruit (LNA pour « Low Noise Amplifier » dans la littérature anglo-saxonne) pour la réception de signaux, et à un amplificateur de puissance de type SSPA (« Solid State Power Amplifier » dans la littérature anglo-saxonne) pour l'émission de signaux. La complexité, le coût, la masse et le volume de la charge utile 20 sont ainsi fortement liés au nombre de sources 24 dans le réseau 23, ainsi qu'au nombre d'éléments (LNA, amplificateurs de puissance) connectés à ces sources. Il convient de réduire ce nombre autant que possible tout en conservant les performances et la flexibilité requises pour la mission du satellite 12.

Le fait d'utiliser un seul et même réseau 23 de sources 24 pour l'émission et la réception de signaux est un moyen de limiter le nombre de sources 24 à embarquer dans la charge utile 20 du satellite 12, en comparaison avec des solutions qui embarquent par exemple deux réseaux de sources différents, l'un pour la réception et l'autre pour l'émission.

De manière connue de l'homme du métier, il existe cependant des contraintes sur les dimensions et l'espacement des sources 24 en fonction des fréquences auxquelles elles opèrent qui font a priori obstacle à la possibilité d'utiliser un même réseau 23 de sources 24 pour l'émission et la réception, en particulier si l'on souhaite couvrir des zones géographiques identiques, ou quasi identiques, en émission et en réception, et si la bande Rx et la bande Tx sont séparées l'une de l'autre d'un écartement important, par exemple supérieur à 1 GHz, ce qui est notamment le cas pour la bande Ka.

Une première contrainte repose sur la relation existant entre la directivité d'une antenne, l'ouverture de ladite antenne, et la longueur d'onde de la fréquence de travail de l'antenne.

Par directivité, on entend le rapport entre la puissance rayonnée par une antenne dans une direction donnée et la puissance que rayonnerait une antenne isotrope. Par ouverture, on entend ici la surface occupée approximativement par l'ensemble des sources 24 du réseau 23 (cela correspond au terme anglais « aperture » parfois utilisé en français dans le domaine des antennes).

Il est ainsi connu de l'homme du métier que la directivité d'une antenne est sensiblement proportionnelle à son ouverture et à l'inverse du carré de la longueur d'onde utilisée. Autrement dit, si l'ouverture est assimilée à la surface d'un disque, pour former des faisceaux directifs une antenne doit présenter un diamètre d'ouverture d'autant plus grand que la longueur d'onde utilisée est grande. Ainsi, une valeur de directivité souhaitée et une longueur d'onde maximale dans une bande de fréquence donnée imposent une taille minimale pour le diamètre de l'ouverture.

Une deuxième contrainte repose sur la relation existant entre la distance séparant deux sources 24 du réseau 23 et l'apparition de lobes dites 'de réseau' dans le rayonnement de l'antenne. Des lobes de réseau se font plus proches (en termes de différence de direction angulaire par rapport à la direction angulaire d'un lobe principal correspondant au faisceau que l'on souhaite former) et plus forts (en termes de directivité) quand la distance séparant deux sources 24 du réseau 23 augmente. Ces lobes de réseau peuvent être source d'interférences pour des signaux échangés dans des faisceaux différents. Cette relation est également dépendante de la longueur d'onde utilisée. Plus la longueur d'onde utilisée est faible, et plus la distance séparant deux sources 24 du réseau 23 doit être faible pour limiter la présence de lobes de réseau. Ainsi, des valeurs seuils pour les lobes de réseau (en termes de direction angulaire et/ou de directivité) et une longueur d'onde minimale dans une bande de fréquences donnée imposent une distance maximale séparant deux sources 24 du réseau 23.

Les figures 4 à 6 illustrent schématiquement dans l'art antérieur la difficulté d'utiliser un seul et même réseau 23 de sources 24 pour l'émission et la réception de signaux quand la bande Rx et la bande Tx sont séparées l'une de l'autre d'un écartement important, par exemple supérieur à 1 GHz (ce qui est notamment le cas pour la bande Ka), et lorsque l'on souhaite couvrir des zones géographiques identiques, ou quasi identiques, en émission et en réception. Pour simplifier l'explication, on se place pour les figures 4 à 6 dans le cas d'une antenne sans réflecteur de type DRA (« Direct Radiating Array » dans la littérature anglo-saxonne). Il convient néanmoins de noter que chaque réseau de sources illustré aux figures 4 à 6 pourrait également être vu comme l'image produite par un réflecteur conventionnel d'un réseau de sources d'une antenne avec réflecteur.

La partie a) de la figure 4 représente schématiquement un réseau 231 de sources 241 adapté pour émettre des signaux sur la bande Tx de la bande Ka selon des faisceaux prédéterminés. Dans l'exemple considéré, les sources 241 sont agencées de telle sorte qu'elles s'inscrivent dans un cercle dont la surface est assimilée à l'ouverture du réseau 231. Les sources 241 sont adjacentes entre elles, mais une distance maximale séparant les centres de deux sources 241 adjacentes (et donc la surface maximale d'une source 241 et le nombre minimal de sources 241 dans le réseau) est imposé par les contraintes liées aux lobes de réseau.

Il convient de noter que dans l'exemple considéré, de manière nullement limitative, les sources 241 sont en forme de disque. Dans des variantes, les sources 241 pourraient avoir d'autres formes, comme par exemple des carrés, des hexagones, etc. Aussi, l'agencement des sources 241 pourrait être différent de celui illustré par la partie a) de la figure 4.

Tel qu'illustré sur la partie c) de la figure 4, les faisceaux sont prédéterminés par exemple de sorte que chaque faisceau couvre une zone 31 géographique d'une région 30 géographique à la surface de la Terre, et de sorte que l'ensemble de ladite région 30 géographique soit couverte par l'ensemble des faisceaux. Les contraintes liées à l'ouverture du réseau 231 et à l'espacement des sources 241 décrites ci-avant permettent alors de déterminer une distance maximale $d_{Tx}$ séparant le centre de deux sources 241 adjacentes et un diamètre minimal $D_{Tx}$ de l'ouverture du réseau 231 de sources 241 utilisé en émission, en fonction respectivement de la longueur d'onde minimale et de la longueur d'onde maximale des fréquences de la bande Tx. Un nombre de sources 241 peut alors également être déterminé. Dans l'exemple considéré, le réseau 231 de sources 241 pour l'émission contient 144 (cent-quarante-quatre) sources 241, il présente un diamètre $D_{Tx}$ de 75 cm, et la distance $d_{Tx}$ séparant les centres de deux sources 241 adjacentes est de 5,41 cm. La longueur d'onde minimale, respectivement maximale, dans la bande de Tx est de 1,49 cm, respectivement 1,73 cm.

Il convient de noter que la figure 4 est schématique et que le nombre des sources 241 représentées ne correspond pas strictement à la réalité (autrement dit toutes les sources 241 ne sont pas représentées). Il en va de même pour les autres figures représentant un réseau de sources.

De manière similaire, il est possible, à partir des mêmes contraintes et pour couvrir des zones 31 géographiques identiques ou quasi identiques, de déterminer une distance maximale $d_{Rx}$ séparant le centre de deux sources 242 et un diamètre minimal $D_{Rx}$ de l'ouverture d'un réseau 232 de sources 242 utilisé en réception en fonction respectivement de la longueur d'onde minimale et de la longueur d'onde maximale des fréquences de la bande Rx. La partie b) de la figure 4 représente schématiquement un tel réseau 232 de sources 242 adapté pour recevoir des signaux sur la bande Rx de la bande Ka. Dans l'exemple considéré, le réseau 232 de sources 242 pour la réception contient alors 127 (cent-vingt-sept) sources 242, il présente un diamètre $D_{Rx}$ de 48 cm et une distance $d_{Rx}$ séparant les centres de deux sources 242 adjacentes de 3,71 cm. La longueur d'onde minimale, respectivement maximale, dans la bande de Rx est de 1,02 cm, respectivement 1,11 cm.

Ainsi, il apparaît que la différence importante entre les longueurs d'onde minimale ou maximale de la bande Rx et de la bande Tx conduisent à des incompatibilités en termes de dimensionnement d'un réseau de sources pour desservir des zones 31 géographiques déterminées en émission et en réception.

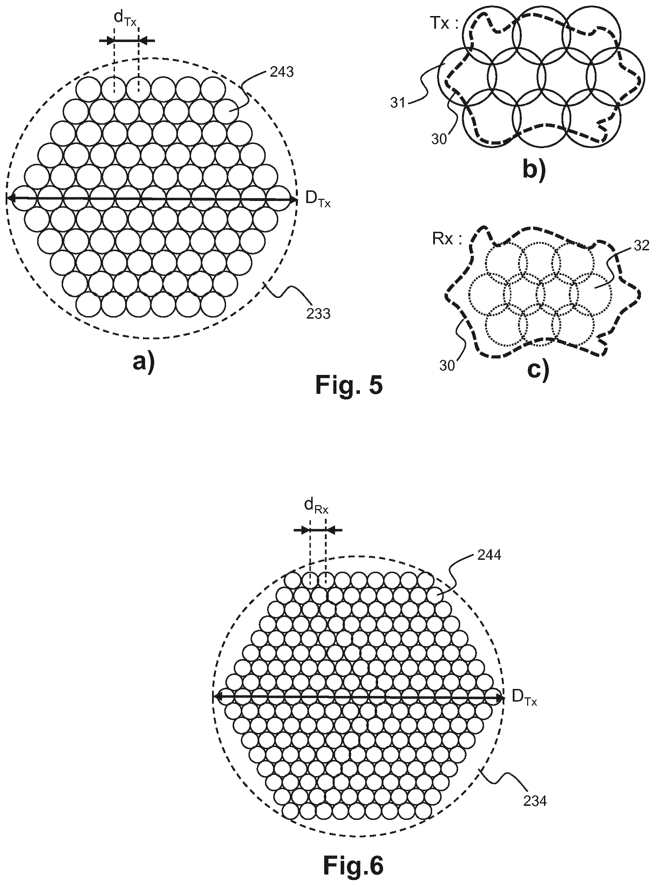

La partie a) de la figure 5 représente schématiquement un réseau 233 de sources 243 similaire à celui illustré à la partie a) de la figure 4, mais utilisé à la fois en émission et en réception. Il présente un diamètre $D_{Tx}$ et une distance séparant les centres de deux sources égale à $d_{Tx}$.

Similairement à la partie b) de la figure 4, la partie b) de la figure 5 représente schématiquement la région 30 géographique couverte par les faisceaux formés en émission par ce réseau 233 de sources 243, chaque faisceau desservant une zone 31 géographique déterminée de la région 30 géographique.

La partie c) de la figure 5 représente schématiquement les zones 32 géographiques correspondant à des faisceaux qui peuvent être reçus par le réseau 233 de sources 243, chaque faisceau desservant une zone 32 géographique particulière. Comme la longueur d'onde maximale de la bande Rx est inférieure à la longueur d'onde maximale de la bande Tx, pour une ouverture donnée, la directivité des faisceaux en réception est plus forte que celle des faisceaux en émission (autrement dit l'angle d'ouverture pour les faisceaux en réception est plus faible que celui des faisceaux en émission). Ainsi, chaque zone 32 géographique couverte en réception par un faisceau est plus petite que la zone 31 géographique correspondante couverte en émission. En conséquence, les faisceaux en réception ne permettent pas de couvrir la totalité de la région 30 géographique.

La figure 6 représente schématiquement un réseau 234 de sources 244 de diamètre $D_{Tx}$ égal au diamètre du réseau 231 de sources 241 décrit en référence à la partie a) de la figure 4, et pour lequel la distance entre les centres de deux sources 244 adjacentes est égal à la distance $d_{Rx}$ correspondante pour le réseau 232 de sources 242 décrit en référence à la partie b) de la figure 4. Un tel réseau 234 de sources 244 comporte 308 (trois-cent-huit) sources, dont 127 (cent-vingt-sept) peuvent être utilisées en réception, et la totalité peuvent être utilisées en émission. Un tel réseau 234 de sources 244 permet alors de desservir des zones 31 géographiques équivalentes à celles décrites en référence à la partie c) de la figure 4 aussi bien en émission qu'en réception. Cependant, un tel réseau 234 de sources 244 est surdimensionné en ce qu'il comporte 308 (trois-cent-huit) sources, et 435 (quatre-cent-trente-cinq) amplificateurs : 127 (cent-vingt-sept) amplificateurs de type LNA et 308 (trois-cent-huit) amplificateurs de type SSPA. Un tel nombre d'éléments pénalise significativement la charge utile 20 du satellite 12 en termes de coût, de complexité, de masse et de volume.

Pour résoudre le problème décrit ci-avant en référence aux figures 4 à 6, la charge utile 20 selon l'invention embarque un même réseau 23 de sources 24 adaptées pour opérer dans deux bandes différentes, par exemple en émission et en réception, ainsi que le réflecteur 22 présentant deux surfaces réfléchissantes 22a, 22b.

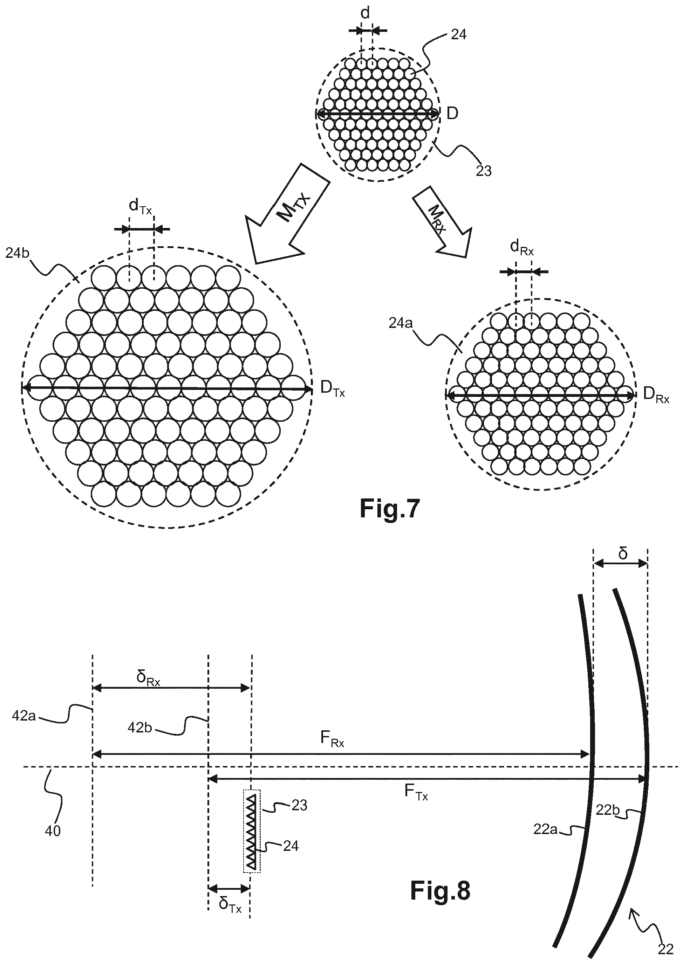

La figure 7 représente schématiquement un mode préféré de réalisation d'un réseau 23 de sources 24 de la charge utile 20 selon l'invention. Le réseau 23 comporte des sources 24 adaptées pour opérer en émission et en réception (chaque source 24 est ainsi par exemple associée à un amplificateur de type LNA et à un amplificateur de type SSPA). Les dimensions et l'agencement des sources 24 d'une part, et la courbure et l'agencement des surfaces réfléchissantes 22a, 22b d'autre part, sont tels que l'image 24b du réseau 23 de sources 24 produite par la surface réfléchissante 22b du réflecteur 22 est sensiblement équivalente au réseau 231 de sources 241 de la partie a) de la figure 4, et que l'image 24a du réseau 23 de sources 24 produite par la surface réfléchissante 22a du réflecteur 22 est sensiblement équivalente au réseau 232 de sources 242 de la partie b) de la figure 4.

En d'autres termes, si on note :

- $M_{Tx}$ le facteur de grandissement de la surface réfléchissante 22b,
- $M_{Rx}$ le facteur de grandissement de la surface réfléchissante 22a,
- D le diamètre de l'ouverture du réseau 23 de sources 24,
- d la distance séparant les centres de deux sources 24 adjacentes du réseau 23,
  alors les formules suivantes sont vérifiées :

- $D \times M_{Tx} \approx D_{Tx}$
- $d \times M_{Tx} \approx d_{Tx}$
- $D \times M_{Rx} \approx D_{Rx}$

- $d \times M_{Rx} \approx d_{Rx}$
  où « $A \approx B$ » signifie « A est sensiblement égal à B », avec par exemple une marge d'erreur de

$$\left| A - B \right| \le \frac{A}{10}$$

10% (autrement dit ).

Comme expliqué précédemment, pour des valeurs seuil en termes d'une part de directivité d'un faisceau, et d'autre part de direction angulaire et/ou de directivité des lobes de réseau, le diamètre $D_{Tx}$ (respectivement $D_{Rx}$) est imposé par la longueur d'onde maximale de la bande Tx (respectivement de la bande Rx), et la distance $d_{Tx}$ (respectivement $d_{Rx}$) entre les centres de deux sources 24 adjacentes est imposée par la longueur d'onde minimale de la bande Tx (respectivement de la bande Rx).

Pour pouvoir couvrir une zone géographique prédéterminée avec un faisceau en réception et un faisceau en émission similaires (ou autrement dit pour qu'un faisceau en émission et un faisceau en réception puissent couvrir des zones géographiques sensiblement identiques), le rapport entre les facteurs de grandissement peut être avantageusement défini comme étant sensiblement égal à un rapport entre une longueur d'onde particulière de la bande Rx et une longueur d'onde particulière de la bande Tx.

Dans l'exemple considéré, les facteurs de grandissement $M_{Tx}$ et $M_{Rx}$ sont choisis de telle sorte que leur rapport soit sensiblement égal au rapport entre la longueur d'onde minimale $\lambda_{min,Tx}$ de la bande Tx et la longueur d'onde minimale $\lambda_{min,Rx}$ de la bande Rx. Pour la bande Ka, $\lambda_{min,Tx}$ vaut environ 1,49 cm et $\lambda_{min,Rx}$ vaut environ 1,02 cm. On choisit alors par exemple la valeur 2,5 pour $M_{Tx}$ et la valeur 1,7 pour $M_{Rx}$. Le réseau 23 comporte alors 144 (cent-quarante-quatre) sources, le diamètre D vaut environ 28 cm et la distance d vaut environ 2,1 cm.

Il convient de noter que d'autres méthodes peuvent être employées pour définir les facteurs de grandissement $M_{Tx}$ et $M_{Rx}$ en fonction des fréquences de la bande Rx et des fréquences de la bande Tx. Par exemple, dans une variante, les facteurs de grandissement $M_{Tx}$ et $M_{Rx}$ peuvent être choisis de telle sorte que leur rapport soit sensiblement égal au rapport entre la longueur d'onde maximale de la bande Tx et la longueur d'onde maximale de la bande Rx. Selon un autre exemple, les facteurs de grandissement $M_{Tx}$ et $M_{Rx}$ peuvent être choisis de telle sorte que leur rapport soit sensiblement égal au rapport entre la longueur d'onde moyenne de la bande Tx et la longueur d'onde moyenne de la bande Rx. Selon encore un autre exemple, les facteurs de grandissement $M_{Tx}$ et $M_{Rx}$ peuvent être choisis de telle sorte que leur rapport soit sensiblement égal au rapport entre la somme de la longueur d'onde minimale de la bande Tx avec la longueur d'onde minimale de la bande Rx et la somme de la longueur maximale de la bande Tx avec la longueur maximale de la bande Rx.

La figure 8 représente schématiquement l'agencement des surfaces réfléchissantes 22a, 22b du réflecteur 22 par rapport au réseau 23 de sources 24 pour un mode préféré de réalisation de la charge utile 20 selon l'invention.

La surface réfléchissante 22a est adaptée pour réfléchir des signaux reçus sur la bande Rx et pour laisser passer des signaux émis sur la bande Tx. La courbure de la surface réfléchissante 22a est telle qu'elle présente une distance focale $F_{Rx}$. Le réseau 23 de sources 24 est décalé par rapport à un plan focal 42a de la surface réfléchissante 22a d'une distance notée $\delta_{Rx}$.

La surface réfléchissante 22b est adaptée pour réfléchir des signaux émis sur la bande Tx et pour laisser passer des signaux reçus sur la bande Rx. La courbure de la surface réfléchissante 22b est telle qu'elle présente une distance focale $F_{Tx}$. Le réseau 23 de sources 24 est décalé par rapport à un plan focal 42b de la surface réfléchissante 22b d'une distance notée $\delta_{Tx}$.

Les deux surfaces réfléchissantes 22a, 22b présentent sensiblement un même axe focal 40 et la distance entre les deux surfaces réfléchissantes 22a, 22b selon cet axe focal 40 est notée $\delta$.

Les valeurs $F_{Tx}$, $F_{Rx}$, $\delta_{Tx}$, $\delta_{Tx}$ sont alors choisies de telle sorte qu'elles vérifient l'équation (1) ci-dessous :

$$\frac{M_{Tx}}{M_{Rx}} = \frac{F_{Tx}}{\delta_{Tx}} \cdot \frac{\delta_{Rx}}{F_{Rx}} \qquad (1)$$

Par exemple, les valeurs suivantes sont choisies :

- $M_{Tx} = 2,5$
- $M_{Rx} = 1,7$
- $F_{Tx} = 5$ m
- $F_{Rx} = 6,8$ m
- $\delta_{Tx} = 2$ m
- $\delta_{Rx} = 4$ m

La valeur de $\delta$ peut alors être calculée comme suit :

$$\delta = F_{Tx} - (F_{Rx} - \cdot\delta_{Rx} + \delta_{Tx})$$

On obtient alors $\delta = 0,2$ m.

Il peut y avoir plusieurs méthodes pour choisir ces valeurs. Par exemple, les valeurs $F_{Tx}$, $F_{Rx}$ et $5_{Rx}$ sont fixées arbitrairement, puis les valeurs $\delta_{Tx}$ et $\delta$ sont déduites pour satisfaire la formule (1). Selon un autre exemple, les valeurs $\delta_{Rx}$, $\delta_{Tx}$ et $F_{Tx}$ sont fixées arbitrairement, puis les valeurs $F_{Rx}$ et $\delta$ sont déduites pour satisfaire la formule (1).

Dans des modes particuliers de réalisation, le réflecteur 22 et/ou le réseau 23 de sources 24 est orientable afin de pouvoir couvrir différentes régions 30 géographiques au cours de la mission du satellite 12.

Dans des modes particuliers de réalisation, par exemple si le satellite 12 doit couvrir des régions géographiques différentes en émission et en réception, les surfaces réfléchissantes 22a, 22b peuvent être mises en forme et agencées de telle sorte que les zones géographiques couvertes par les faisceaux en émission soient différentes (par exemple en forme, en taille, en position) des zones géographiques couvertes par les faisceaux en réception.

Dans des modes particuliers de réalisation, l'une des deux surfaces réfléchissantes 22a, 22b peut être sensiblement plane (facteur de grandissement sensiblement égal à 1), par exemple si le réseau 23 de sources 24 présente directement des dimensions appropriées pour former des faisceaux adaptés aux zones 31 géographiques à couvrir en émission ou en réception.

Dans des modes particuliers de réalisation, la charge utile 20 du satellite 12 peut embarquer un autre réflecteur utilisé en association avec le réflecteur 22 à double surface réfléchissante selon l'invention. De tels système employant un réflecteur dit « primaire » et un réflecteur dit « secondaire » (ou « sous-réflecteur ») sont connus de l'homme du métier, par exemple les systèmes de type Cassegrain ou Grégorien, ou bien les systèmes dit à « antennes confocales ».

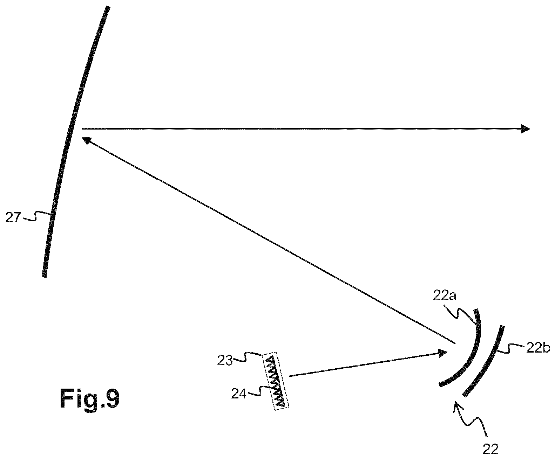

La figure 9 illustre schématiquement un mode de réalisation avec un système confocal. Dans un système confocal, le point focal d'un réflecteur primaire doit coïncider sensiblement avec le point focal du réflecteur secondaire. D'autre part, il est connu que le facteur de grandissement d'un système confocal conventionnel correspond au rapport entre la distance focale du réflecteur primaire et la distance focale du réflecteur secondaire.

Tel qu'illustré à la figure 9, un réflecteur 27 primaire coopère avec un réflecteur 22 secondaire pour émettre et ou recevoir les signaux en provenance ou à destination des sources 24. Le réflecteur 22 secondaire est un réflecteur présentant deux surfaces réfléchissantes 22a, 22b. Il convient de noter que dans l'exemple illustré à la figure 9, et contrairement à l'exemple illustré à la figure 8, c'est la surface réfléchissante 22a la plus proche du réseau 23 de sources 24 qui est plus courbée et qui opère en émission sur la bande Tx. L'autre surface réfléchissante 22b est moins courbée et opère sur la bande Rx.

La surface réfléchissante 22a étant plus courbée, elle présente une distance focale plus faible que l'autre surface réfléchissante 22b, Il est alors possible, en choisissant convenablement la distance séparant les deux surfaces réfléchissantes 22a et 22b de faire en sorte que le point focal de chaque surface réfléchissante 22a, 22b coïncide sensiblement avec le point focal du réflecteur 27 primaire. De plus, si on note :

- F : la distance focale de réflecteur 27 primaire
- $F_{Tx}$ et $F_{Rx}$ : les distances focales respectives des surfaces réfléchissantes 22a et 22b du réflecteur 22 secondaire,

alors les facteurs de grandissement respectifs $M_{Tx}$ en émission et $M_{Rx}$ en réception sont définis ainsi :

$$M_{Tx} = \frac{F}{F_{Tx}}$$

$$M_{Rx} = \frac{F}{F_{Rx}}$$

Il est alors possible d'obtenir des valeurs de grandissement souhaités pour $M_{Tx}$ et $M_{Rx}$ en choisissant de manière appropriée les distances focales F, $F_{Tx}$ et $F_{Rx}$.

Dans l'exemple illustré à la figure 9, le réflecteur 22 secondaire est un réflecteur 22 à double surface réfléchissante selon l'invention, et le réflecteur 27 primaire est un réflecteur conventionnel présentant une seule surface réfléchissante. Rien n'empêche cependant, dans une variante, que ce soit le réflecteur primaire qui soit un réflecteur 22 à double surface réfléchissante et que le réflecteur secondaire soit un réflecteur conventionnel présentant une simple surface réfléchissante, voire que les deux réflecteurs primaire et secondaire soient des réflecteurs 22 à double surface réfléchissante.

La description ci-avant illustre clairement que, par ses différentes caractéristiques et leurs avantages, la présente invention atteint les objectifs fixés.

En particulier, l'utilisation d'une antenne multi-faisceaux de type MFPB avec un réseau 23 de sources 24 et un ou plusieurs réseaux de formation de faisceaux 25a, 25b offre la flexibilité requise en termes de couverture et de capacité grâce au partage de la puissance et de la bande passante disponibles au niveau de la charge utile 20 du satellite 12. D'autre part, la solution proposée est peu complexe et particulièrement compacte, aussi bien au niveau du réseau 23 de sources 24 qu'au niveau du réflecteur 22. En effet, le fait d'utiliser un seul et même réseau 23 de sources 24 pour l'émission et pour la réception permet de limiter le nombre de sources 24. En outre, l'invention permet d'utiliser un nombre total d'amplificateurs (LNA, SSPA) comparable avec celui correspondant à une solution utilisant deux réseaux de sources distincts, l'un en réception et l'autre en émission. Ce nombre total d'amplificateurs est nettement moindre que celui correspondant à une solution « naïve » telle que celle décrite en référence à la figure 6. Cela conduit à un gain en termes de complexité, de volume et de masse. En outre, l'utilisation d'un réflecteur à double surface réfléchissante permet de limiter considérablement le volume occupée par l'antenne ainsi que sa masse, en comparaison par exemple avec des systèmes pour lesquels plusieurs réflecteurs distincts doivent être utilisés et placés en ligne de vue directe avec un réseau de sources.

L'ensemble de ces caractéristiques confèrent ainsi à la charge utile 20 selon l'invention un avantage important en termes de complexité, de volume et de masse.

De manière plus générale, il est à noter que les modes de réalisation considérés ci-dessus ont été décrits à titre d'exemples non limitatifs, et que d'autres variantes sont par conséquent envisageables.

Notamment, l'invention a été décrite en considérant que l'antenne 21 de la charge utile 20 du satellite 12 est configurée pour émettre et recevoir des signaux respectivement sur la bande Tx et la bande Rx de la bande Ka. Mais de manière générale, l'invention est applicable au cas où une antenne 21 de la charge utile 20 du satellite 12 est utilisée pour l'émission ou la réception de données sur une première bande de fréquences, dite « bande B1 », et pour l'émission ou la réception de données sur une deuxième bande de fréquences, dite « bande B2 », dans le cas où la bande B1 et la bande B2 ont un écartement fréquentiel important, par exemple supérieur à 10% de la fréquence centrale de la bande B1.

Aussi, la forme, l'agencement ou les dimensions des sources 24 ou du réseau 23 ont été données à titre d'exemple nullement limitatif. D'autres choix pour ces paramètres correspondent à des variantes de l'invention. Par exemple, les sources 24 pourraient avoir une forme carrée ou hexagonale, et elles pourraient être agencées au sein du réseau 23 différemment que sous la forme d'un disque, par exemple en fonction de la forme de la région géographique à couvrir.

De la même manière, la courbure et l'agencement des surfaces réfléchissantes 22a, 22b dans les exemples décrits ne doivent pas être considérés comme limitatifs. D'autres valeurs peuvent en effet être choisies par exemple pour les distances focales des surfaces réfléchissantes 22a, 22b, pour les distances entre le réseau 23 de sources 24 et les plans focaux des surfaces réfléchissantes, ou bien pour la distance séparant les deux surfaces réfléchissantes.

Deux exemples de sélectivité ont été proposées pour les surfaces réfléchissantes 22a, 22b : par polarisation, ou par fréquence. Là encore, il peut être envisagé de choisir d'autres solutions permettant de rendre une surface réfléchissante transparente pour des signaux transportés sur une bande de fréquences. De telles solutions alternatives doivent être considérées comme des variantes de l'invention.

## Revendications

1. Charge utile (20) de satellite (12) d'un système (10) de télécommunications par satellite, ladite charge utile (20) comportant un réflecteur (22), un réseau (23) de sources (24), et un réseau de formation de faisceaux (25a, 25b) relié auxdites sources (24), ledit réseau (23) de sources (24) étant adapté pour former des faisceaux pour transporter des signaux à la fois dans une première bande de fréquences, dite bande B1, et dans une deuxième bande de fréquences, dite bande B2, ladite bande de fréquences B2 étant différente de la bande de fréquences B1, chaque faisceau étant formé par plusieurs sources (24) dudit réseau (23) de sources (24), chaque source (24) du réseau (23) de sources (24) étant adaptée pour la bande B1 et pour la bande B2, ledit réflecteur (22) comportant deux surfaces réfléchissantes (22a, 22b) positionnées l'une derrière l'autre par rapport au réseau (23) de sources (24) et présentant des courbures différentes de sorte que chaque surface réfléchissante (22a, 22b) est adaptée pour produire une image du réseau (23) de sources (24) avec un facteur de grandissement différent, la surface réfléchissante (22a) la plus proche du réseau (23) de sources (24) étant transparente pour l'ensemble des signaux transportés sur la bande B2 et adaptée pour réfléchir des signaux transportés dans la bande B1, et l'autre surface réfléchissante (22b) étant adaptée pour réfléchir des signaux transportés dans la bande B2.

2. Charge utile (20) selon la revendication 1 dans laquelle la surface réfléchissante (22b) la plus éloignée du réseau (23) de sources (24) est en outre transparente pour l'ensemble des signaux transportés sur la bande B1.

3. Charge utile (20) selon l'une des revendications 1 à 2 dans laquelle des signaux transportés sur la bande B1 suivent une polarisation différente d'une polarisation suivie par des signaux transportés sur la bande B2, et une surface réfléchissante (22a, 22b) transparente est inopérante électriquement pour l'une de ces deux polarisations.

4. Charge utile (20) selon la revendication 3 dans laquelle une surface réfléchissante (22a, 22b) transparente comporte des rubans conducteurs de l'électricité disposés parallèlement les uns aux autres.

5. Charge utile (20) selon la revendication 4 dans laquelle le réflecteur (22) comporte en outre des moyens adaptés pour entraîner en rotation la ou les surfaces réfléchissantes (22a, 22b) comportant des rubans conducteurs.

6. Charge utile (20) selon l'une des revendications 1 à 2 dans laquelle une surface réfléchissante (22a, 22b) transparente est une surface sélective en fréquence.

7. Charge utile (20) selon la revendication 6 dans laquelle les sources (24) sont adaptées en outre pour émettre ou recevoir des signaux selon des polarisations différentes sur la bande B1 et/ou sur la bande B2.

8. Charge utile (20) selon l'une des revendications 1 à 7 dans laquelle le rapport entre les facteurs de grandissement est défini en fonction des fréquences des bandes B1 et B2 de sorte que les faisceaux formés sur la bande B1 et les faisceaux formés sur la bande B2 couvrent des zones géographiques identiques.

9. Charge utile (20) selon la revendication 8 dans laquelle le rapport entre les facteurs de grandissement est compris entre 90% et 110% d'un rapport entre une longueur d'onde particulière de la bande B1 et une longueur d'onde particulière de la bande B2.

10. Charge utile (20) selon la revendication 9 dans laquelle le rapport entre les facteurs de grandissement est compris entre 90% et 110% d'un rapport

$$\frac{\lambda_{\min, B1}}{\lambda_{\min, B2}},$$

où $\lambda_{min,B1}$ et $\lambda_{min,B2}$ sont respectivement la plus petite longueur d'onde de la bande B1 et la plus petite longueur d'onde de la bande B2.

11. Charge utile (20) selon l'une des revendications 1 à 10 dans laquelle la bande B1 et/ou la bande B2 appartiennent à l'une des bandes Ku, Ka, Q ou V.

12. Charge utile (20) selon l'une des revendications 1 à 10 dans laquelle la bande B1 et la bande B2 correspondent respectivement à l'ensemble des fréquences montantes et à l'ensemble des fréquences descendantes de l'une des bandes Ku, Ka, Q ou V.

13. Charge utile (20) selon l'une des revendications 1 à 12 dans laquelle le réflecteur (22) et/ou le réseau (23) de sources (24) est orientable.

14. Charge utile (20) selon l'une des revendications 1 à 13 dans laquelle le réflecteur (22) comportant deux surfaces réfléchissantes (22a, 22b) correspond à un réflecteur primaire ou à un réflecteur secondaire d'un système à deux réflecteurs.

15. Satellite (12) d'un système de télécommunications par satellite, ledit satellite comportant une charge utile (20) selon l'une des revendications 1 à 14.

**Patentansprüche**

1. Nutzlast (20) für einen Satelliten (12) eines Satelliten-Telekommunikationssystems (10), wobei die Nutzlast (20) einen Reflektor (22), ein Netzwerk (23) von Quellen (24), und ein Netzwerk zur Strahlformung (25a, 25b) umfasst, das mit den Quellen (24) verbunden ist, wobei das Quellen- (24) Netzwerk (23) dafür geeignet ist, Strahlen zu formen, um Signale gleichzeitig in einem als Band B1 bezeichneten ersten Frequenzband, und in einem als Band B2 bezeichneten zweiten Frequenzband zu transportieren, wobei sich das Frequenzband B2 vom Frequenzband B1 unterscheidet, wobei jeder Strahl von mehreren Quellen (24) des Quellen-(24) Netzwerks (23) geformt wird, wobei jede Quelle (24) des Quellen- (24) Netzwerks (23) für das Band B1 und für das Band B2 geeignet ist, wobei der Reflektor (22) zwei reflektierende Flächen (22a, 22b) umfasst, die in Bezug auf das Quellen- (24) Netzwerk (23) hintereinander positioniert sind und unterschiedliche Krümmungen aufweisen, sodass jede reflektierende Fläche (22a, 22b) dafür geeignet ist, ein Bild des Quellen- (24) Netzwerks (23) mit einem unterschiedlichen Vergrößerungsfaktor zu erzeugen, wobei die reflektierende Fläche (22a), die dem Quellen- (24) Netzwerk (23) am nähesten liegt, für sämtliche der auf dem Band B2 transportierten Signale durchlässig und dafür geeignet ist, Signale, die im Band B1 transportiert werden, zu reflektieren, und wobei die andere reflektierende Fläche (22b) dafür geeignet ist, Signale, die im Band B2 transportiert werden, zu reflektieren.

2. Nutzlast (20) nach Anspruch 1, wobei die reflektierende Fläche (22b), die am weitesten vom Quellen- (24) Netzwerk (23) entfernt liegt, des Weiteren für sämtliche der auf dem Band B1 transportierten Signale durchlässig ist.

3. Nutzlast (20) nach einem der Ansprüche 1 bis 2, wobei auf dem Band B1 transportierte Signale einer Polarisation folgen, die sich von einer Polarisation, der auf dem Band B2 transportierte Signale folgen, unterscheidet, und eine durchlässige reflektierende Fläche (22a, 22b) bei einer dieser zwei Polarisationen elektrisch wirkungslos ist.

4. Nutzlast (20) nach Anspruch 3, wobei eine durchlässige reflektierende Fläche (22a, 22b) elektrisch leitende Streifen umfasst, die parallel zueinander angeordnet sind.

5. Nutzlast (20) nach Anspruch 4, wobei der Reflektor (22) des Weiteren Mittel umfasst, die dafür geeignet sind, die reflektierende(n) Fläche(n) (22a, 22b), die leitenden Streifen umfasst/umfassen, in Drehung zu versetzen.

6. Nutzlast (20) nach einem der Ansprüche 1 bis 2, wobei es sich bei einer durchlässigen reflektierenden Fläche (22a, 22b) um eine frequenzselektive Fläche handelt.

7. Nutzlast (20) nach Anspruch 6, wobei die Quellen (24) des Weiteren dafür geeignet sind, Signale in unterschiedlichen Polarisationen auf dem Band B1 und/oder auf dem Band B2 zu senden oder zu empfangen.

**8.** Nutzlast (20) nach einem der Ansprüche 1 bis 7, wobei das Verhältnis zwischen den Vergrößerungsfaktoren in Abhängigkeit von den Frequenzen der Bänder B1 und B2 definiert ist, sodass die auf dem Band B1 geformten Strahlen und die auf dem Band B2 geformten Strahlen identische geografische Zonen abdecken.

**9.** Nutzlast (20) nach Anspruch 8, wobei das Verhältnis zwischen den Vergrößerungsfaktoren zwischen 90 % und 110 % eines Verhältnisses zwischen einer bestimmten Wellenlänge des Bandes B1 und einer bestimmten Wellenlänge des Bandes B2 liegt.

**10.** Nutzlast (20) nach Anspruch 9, wobei das Verhältnis zwischen den Vergrößerungsfaktoren zwischen 90 % und 110 % eines Verhältnisses $\frac{\lambda_{min,B1}}{\lambda_{min,B2}}$ liegt, wobei $\lambda_{min,B1}$ und $\lambda_{min,B2}$ die kleinste Wellenlänge des Bandes B1 bzw. die kleinste Wellenlänge des Bandes B2 sind.

**11.** Nutzlast (20) nach einem der Ansprüche 1 bis 10, wobei das Band B1 und/oder das Band B2 zu einem der Bänder Ku, Ka, Q oder V gehören.

**12.** Nutzlast (20) nach einem der Ansprüche 1 bis 10, wobei das Band B1 und das Band B2 sämtlichen der Aufwärtsfrequenzen bzw. sämtlichen der Abwärtsfrequenzen eines der Bänder Ku, Ka, Q oder V entsprechen.

**13.** Nutzlast (20) nach einem der Ansprüche 1 bis 12, wobei der Reflektor (22) und/oder das Quellen- (24) Netzwerk (23) orientierbar ist.

**14.** Nutzlast (20) nach einem der Ansprüche 1 bis 13, wobei der zwei reflektierende Flächen (22a, 22b) umfassende Reflektor (22) einem Primärreflektor oder einem Sekundärreflektor eines Zwei-Reflektoren-Systems entspricht.

**15.** Satellit (12) eines Satelliten-Telekommunikationssystems, wobei der Satellit eine Nutzlast (20) nach einem der Ansprüche 1 bis 14 umfasst.

**Claims**

**1.** Payload (20) of a satellite (12) of a satellite telecommunication system (10), said payload (20) comprising a reflector (22), a network (23) of sources (24), and a beam-forming network (25a, 25b) connected to said sources (24), said network (23) of sources (24) being suitable for forming beams for transporting signals both in a first frequency band, called band B1, and in a second frequency band, called band B2, said frequency band B2 being different from frequency band B1, each beam being formed by a plurality of sources (24) in said network (23) of sources (24), each source (24) of the network (23) of sources (24) being suitable for band B1 and for band B2, said reflector (22) comprising two reflective surfaces (22a, 22b) positioned one behind the other with respect to the network (23) of sources (24) and having different curvatures so that each reflective surface (22a, 22b) is suitable for producing an image of the network (23) of sources (24) with a different magnification factor, the reflective surface (22a) closer to the network (23) of sources (24) being transparent for all the signals transported on the band B2 and suitable for reflecting signals transported in the band B1, and the other reflective surface (22b) being suitable for reflecting signals transported in the band B2.

**2.** Payload (20) according to claim 1, wherein the reflective surface (22b) further away from the network (23) of sources (24) is furthermore transparent for all the signals transported on the band B1.

**3.** Payload (20) according to one of claims 1 to 2, wherein signals transported on the band B1 follow a polarisation different from a polarisation followed by signals transported on the band B2, and a transparent reflective surface (22a, 22b) is inoperative electrically for one of these two polarisations.

**4.** Payload (20) according to claim 3, wherein a transparent reflective surface (22a, 22b) comprises electrically conductive strips disposed parallel to each other.

**5.** Payload (20) according to claim 4, wherein the reflector (22) further comprises means suitable for rotating the reflective surface or surfaces (22a, 22b) comprising conductive strips.

**6.** Payload (20) according to one of claims 1 to 2, wherein a transparent reflective surface (22a, 22b) is a surface selective for frequency.

**7.** Payload (20) according to claim 6, wherein the sources (24) are furthermore suitable for transmitting or receive signals in different polarisations on the band B1 and/or on the band B2.

**8.** Payload (20) according to any of claims 1 to 7, wherein the ratio between the magnification factors is defined according to the frequencies of the bands B1 and B2 so that the beams formed on the band B1 and the beams formed on the band B2 cover identical geographical zones.

**9.** Payload (20) according to claim 8, wherein the ratio between the magnification factors is between 90% and 110% of a ratio between a particular wavelength of the band B1 and a particular wavelength of the band B2.

10. Payload (20) according to claim 9, wherein the ratio between the magnification factors is between 90%

$$\frac{\lambda_{\min,B1}}{\lambda_{\min,B2}},$$

and 110% of a ratio where $\lambda_{\min,B1}$ and $\lambda_{\min,B2}$ are respectively the shortest wavelength of the band B1 and the shortest wavelength of the band B2.

11. Payload (20) according to any of claims 1 to 10, wherein the band B1 and/or the band B2 belong to one of the bands Ku, Ka, Q or V.

12. Payload (20) according to any of claims 1 to 10, wherein the band B1 and the band B2 correspond respectively to all the uplink frequencies and to all the downlink frequencies of one of the bands Ku, Ka, Q or V.

13. Payload (20) according to any of claims 1 to 12, wherein the reflector (22) and/or the network (23) of sources (24) is orientable.

14. Payload (20) according to any of claims 1 to 13, wherein the reflector (22) comprising two reflective surfaces (22a, 22b) corresponds to a primary reflector or to a secondary reflector of a two-reflector system.

15. Satellite (12) in a satellite telecommunication system, said satellite comprising a payload (20) according to any of claims 1 to 14.

**Fig. 1**

**Fig. 2**

**Fig. 3**

**Fig.4**

Fig. 5

Fig.6

**Fig.7**

**Fig.8**

27

22a

22b

23

24

**Fig.9**

22

**EP 3 639 409 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2004008148 A1
- EP 1083626 A2